# EUROPEAN PATENT SPECIFICATION

(11) **EP 3 804 004 B1**
(45) Date of publication and mention of the grant of the patent: **22.01.2025**
(21) Application number: 19730703.6
(22) Date of filing: 31.05.2019
(51) Int. Cl.: H01M 50/209, H01M 10/6556

(54) **MOUNTING SYSTEM FOR AN ENERGY STORAGE MODULE**
BEFESTIGUNGSSYSTEM FÜR EIN ENERGIESPEICHERMODUL
SYSTÈME DE MONTAGE POUR UN MODULE DE STOCKAGE D'ÉNERGIE

(30) Priority: 08.06.2018 GB 201809457
(43) Date of publication of application: 14.04.2021
(73) Proprietor: Siemens Energy AS, 0596 Oslo (NO)
(72) Inventor: SKJETNE, Arve, 7032 Trondheim (NO); BØRSHEIM, Eirik, 0485 Oslo (NO)
(74) Representative: Roth, Thomas
(86) International application number: PCT/EP2019/064197
(87) International publication number: WO 2019/233894

(56) References cited:
- EP-A1- 2 782 161
- US-A1- 2012 156 537
- US-A1- 2013 224 523

## Description

This invention relates to a mounting system for energy storage modules, in particular for modules comprising electrochemical cells, or batteries, providing electrical energy to an end user.

Stored electrical energy modules, or power units of various types are becoming increasingly common in many applications, in particular for use where there are environmental concerns relating to emissions in sensitive environments, or public health concerns. Stored electrical energy power units are typically used to provide electrical energy to operate equipment, to avoid emissions at the point of use, although that stored energy may have been generated in many different ways. Stored electrical energy may also be used to provide peak shaving in systems otherwise supplied from the grid, or from various types of power generation system, including diesel generators, gas turbines, or renewable energy sources. Aircraft, vehicles, vessels, offshore rigs, or rigs and other powered equipment in remote locations are examples of users of large scale stored electrical energy. Vehicle drivers may use the stored energy power unit in city centres and charge from an internal combustion engine on trunk roads, to reduce the harmful emissions in the towns and cities, or they may charge up from an electricity supply. Ferries which carry out most of their voyage relatively close to inhabited areas, or in sensitive environments are being designed with hybrid, or fully electric drive systems. Ferries may operate with stored energy to power the vessel when close to shore, using diesel generators offshore to recharge the batteries. In some countries the availability of electricity from renewable energy sources to use to charge the stored energy unit means that a fully electric vessel may be used, provided that the stored energy units are sufficiently reliable for the distances being covered, with no diesel, or other non-renewable energy source used at all. Whether hybrid, or fully electric, the stored energy units may be charged from a shore supply when docked. The development of technology to achieve stored energy units that are reliable enough for prolonged use as the primary power source must address certain technical issues. EP2782161 and US2012/156537 disclose battery housings that are connected together.

In accordance with a first aspect of the present invention, a mounting system is provided for an energy storage module, the module comprising a plurality of energy storage devices electrically connected together in series; each energy storage module further comprising a plurality of coolers onto each of which one of the plurality of energy storage devices is mounted; wherein the mounting system comprises two or more connectors on each cooler, each connector comprising a first part and a second part, wherein the connector is connectable with a corresponding second part and first part on another cooler; wherein each first part comprises a resilient member supporting a protruding tab; wherein each second part comprises a corresponding slot to receive the protruding tab; and, wherein the mounting system further comprises an electronics board mount, the mount comprising one or more pairs of resilient locating members spaced from one another by a distance substantially equal to a width of the electronics board, each resilient locating member further comprising a downward facing surface.

The first part may comprise a male part and the second part comprises a corresponding female part.

The first part may comprise a cylindrical part having a first diameter; and the second part comprises a cylindrical part having a second diameter, greater than the first diameter.

Each connector comprises a cylindrical body integrally formed in a wall of the cooler incorporating the second part and the first part, the resilient member of the first part comprising a pin independently removable from the cylindrical body.

The cylindrical body and resilient member of the connector of each cooler define a hollow through hole; and the mounting system further comprises a rod inserted in the through hole and extending through the plurality of coolers.

The resilient member may comprise a tapered body and the second part comprises a correspondingly tapered receptacle.

An electronics board may comprise one or more sensors, connectable to tabs of each cell of each cooler forming the energy storage module when the electronics board is fitted in the mount.

Components of the mounting system may comprise one of polythene, polyamide, or thermoplastics.

The coolers may comprise one of polythene, polyamide or thermoplastics.

An example of a mounting system for energy storage modules, according to the present invention will now be described with reference to the accompany drawings in which:
Figure 1 is a block diagram illustrating an energy storage system in which the mounting system of the present invention may be used;
Figure 2 illustrates an electronics board mounted using an example of a mounting system:
Figure 3 illustrates one embodiment of part of a mounting system for mounting an electronics board as in Fig.2, in more detail;
Figure 4 illustrates an alternative embodiment of part of the mounting system;
Figures 5a and 5b shows other views of part of the mounting system for any of the embodiments of Figs.2, 3, 4 or 6;
Figure 6 illustrates another embodiment of part of the mounting system;
Figure 7 illustrates a part of a mounting system according to the present invention, in its unmated state;
Figure 8 is an exploded view of an energy storage module using the mounting system of any of the embodiments of the present invention; and,
Figures 9a and 9b illustrate an alternative embodiment of a mounting system.

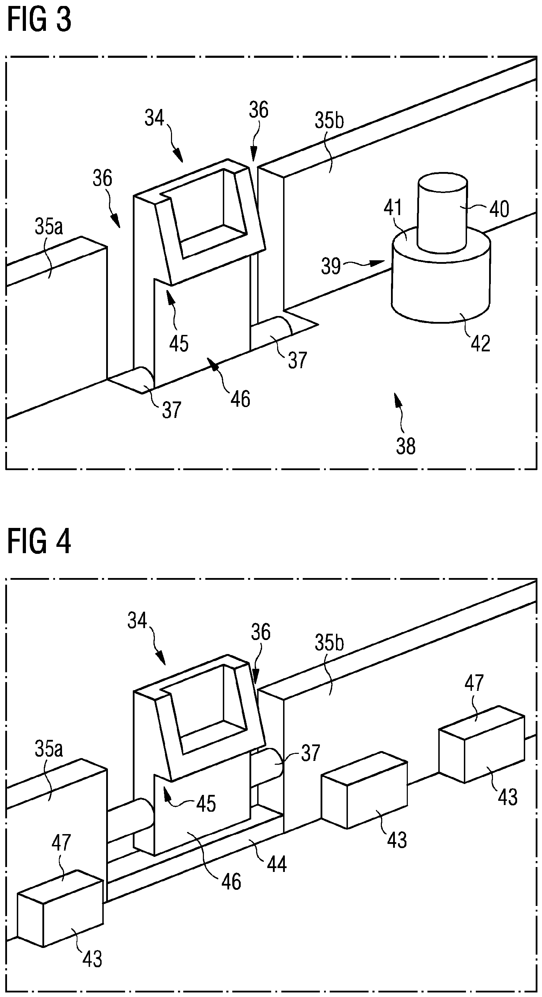

The embodiments according to figures 3 - 6 and 9a, 9 do not form part of the present invention.

Early large scale batteries were lead acid, but more recently, lithium ion batteries have been developed for electrical energy storage for large scale applications. Li-ion batteries are typically pressurised and the electrolyte is flammable, so they require care in use and storage. A problem which may occur with Li-ion batteries is thermal runaway which may be caused by an internal short circuit in a battery cell, created during manufacture. Other causes, such as mechanical damage, overcharge, or uncontrolled current may also cause thermal runaway, but the battery system design is typically adapted to avoid these. Manufacturing issues with the cells cannot be ruled out entirely, so precautions are required to minimise the effect should thermal runaway occur. In a large scale Li-ion battery system, the amount of energy that is released during a thermal runaway is a challenge to contain. A thermal event may increase temperatures in a single cell from a standard operating temperature in the range of 20°C to 60°C, in one example the cell operating temperature may be 20°C to 26°C, to as much as 700°C to 1000°C. As safe operating temperatures are below 60°C, so this is a significant problem.

There are strict regulations in the marine and offshore industries regarding risk to the vessel or rig, one requirement being that there should be no transfer of excess temperature from one cell to another. If overheating occurs, then it should be contained in a single cell and not allowed to spread. In addition, for marine and offshore applications, weight and volume of any equipment is severely restricted, leading to compact, lightweight systems being preferable. It is a challenge to produce a compact, lightweight, system that achieves the required thermal isolation and cools the cell in which excess heating occurs, quickly and efficiently.

In a Li-ion battery system, it is very important that the temperature of the battery cells does not exceed the prescribed operating temperature and that the cell temperature in the entire system is uniform. Sustained operation outside the prescribed operating temperature window may severely affect the lifetime of the battery cells and increases the risk of thermal runaway occurring.

For marine applications, there is a particular focus on using energy storage modules, such as batteries, at their maximum charge or discharge rate due to cost of installation and the weight and space taken up by the modules when on a vessel or offshore platform. Furthermore, maintenance and repair, or replacement is complicated and expensive compared to land based uses of stored energy systems, so extending the lifespan of stored energy modules is particularly important. For the example of Li- ion batteries, these are sensitive to high temperature, so it is important to ensure that the operating and ambient temperature are controlled for all cells of a Li-ion battery system to ensure the design lifetime is met. Local variations or hot spots on a single cell may also compromise the total lifetime achievable.

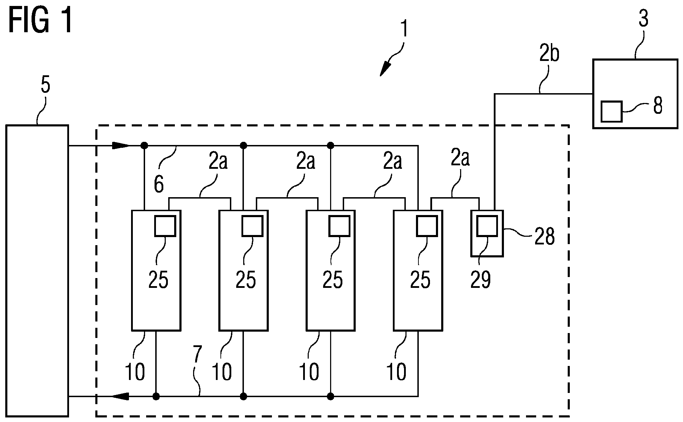

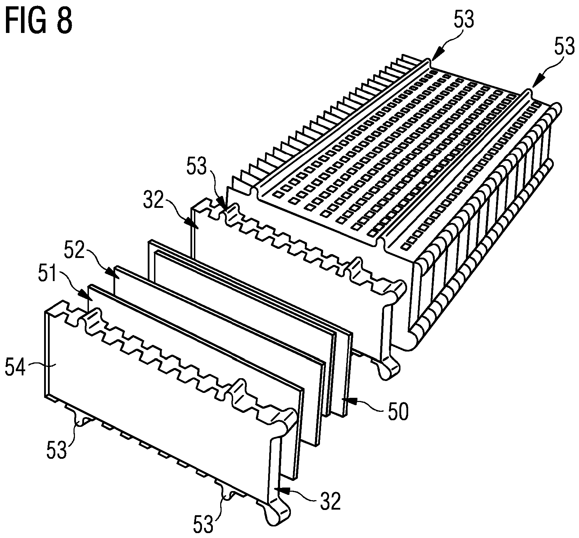

Energy storage modules comprising a plurality of energy storage devices, i.e. cells may be combined in an energy storage unit. It is desirable to improve the ease and efficiency of manufacturing of each of the energy storage modules of the energy storage unit. An example of an energy storage system in which the present invention may be applied is illustrated in Fig.1. The system comprises a cabinet, cubicle, or unit 1, in which a plurality of energy storage modules 10 are electrically connected together by buses 2a to a cubicle controller 28 and by bus 2b to a central controller 3. Energy storage modules within a cubicle may be electrically connected in series, as shown, or in parallel, or a combination, such as some modules being connected in parallel and then that parallel grouping being connected in series with other modules in the unit. Each of the energy storage modules is cooled by cooling fluid, circulating from cooling system 5 through inlet pipes 6 and outlet pipes 7. The cooling fluid is typically water which is inexpensive and easier to source and dispose of than synthetic coolants. Additives may be provided, for example to inhibit freezing, biogrowth, or corrosion. Typically the proportion of additive is determined by the additive chosen, for example 20% frost inhibitor. The cooling fluid is typically supplied to each module in parallel, although it is possible, but less effective for the later modules, to supply the cooling fluid in series. Each energy storage module 10 comprises a plurality of energy storage devices, for example battery cells 50, as illustrated in Fig.8, electrically connected together in series. A modular system of this type, incorporating cooling, is particularly applicable for Li-ion cells.

Within a module 10, on at least one side of each cell 50, a battery cell cooler 54 is provided which receives cooling fluid from the cooling system 5 via the inlet pipes 6 and outlet pipes 7 to cool the battery cell. The cell cooler comprises tubing for the cooling fluid to flow through, which may be metal tubing, but more typically is a synthetic material, such as polymer plastics, for example polythene, polyamide, such as PA66 plastics, or thermoplastics such as TCE2, TCE5, or other suitable materials, which may be moulded or extruded to the required shape and is able to withstand normal operating temperatures of the energy storage modules 10. Individual coolers 54 may be stacked on one another, with or without additional layers 51, 52 between the side of the cell away from its cooler and the surface of the next cooler in the stack. Assembly and installation of such modular energy storage systems may be improved.

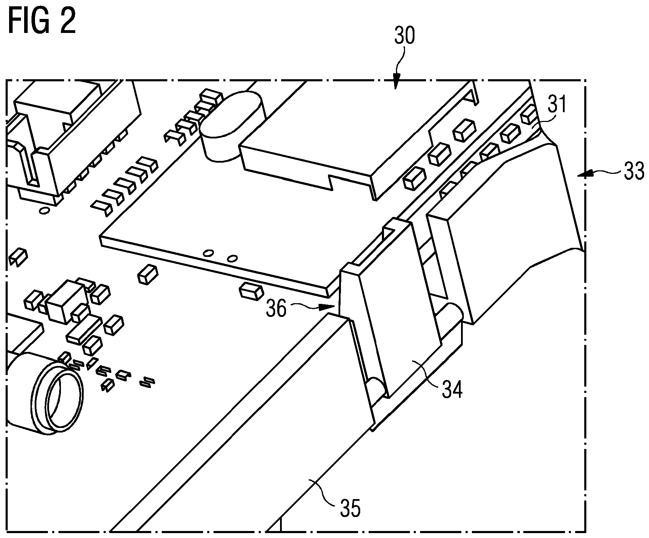

The battery module comprises one or more electronics boards 30, for example as shown in Fig.2. The electronics board 30 typically comprises various electronic components mounted to a printed circuit board (PCB) 31. There may be an electronics motherboard mounted at one end, and several electronics boards for measurements, which are mounted to the side of the energy storage module 10, in electrical contact with the cell tabs of each cell. The module 10 may comprise a stack of coolers 54 (as shown in Fig.8) having a wall extending from the surface which functions as a cell housing 32, each cooler housing an energy storage device 50, such as an electrochemical cell, or battery within the housing 32 and in contact with one surface of the cooler 54. The integral cooler through which cooling fluid flows, cools the surface of the cell that is in contact with the cooler 54. Additionally, a flexible sheet 52 may be provided on the other surface of the cell, to allow the cell to swell over time, yet still maintain compression. In one example, a thermally insulating layer 51 may be provided as well as the flexible sheet 52, to reduce heat transfer between adjacent cells. Alternatively, there is no thermally insulating layer and the next cooler in the stack provides some cooling to the surface of the cell on which the flexible sheet is mounted.

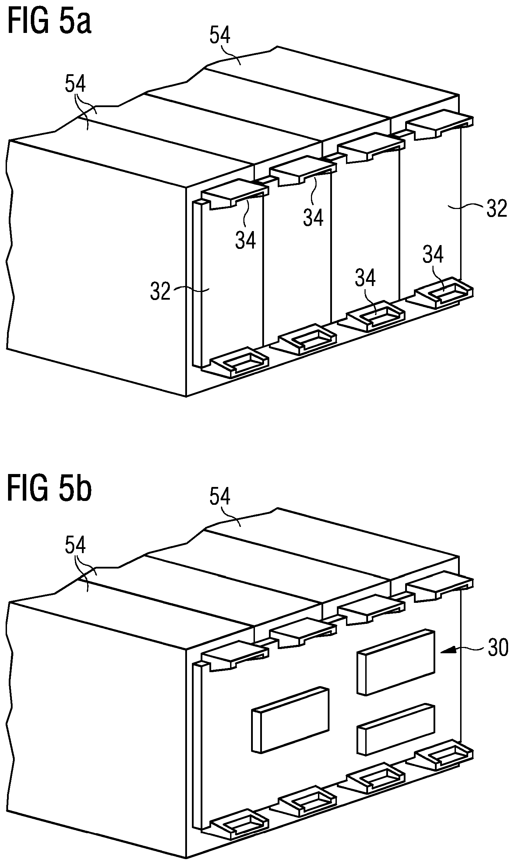

The electronics board 30 may be electrically connected to the cells and to sensors (not shown) along the stacked cell housings 32 in order to measure various parameters, including cell voltage and cell temperatures. For example, temperature may be measured at the cell tab to provide a representation of the cell temperature. Alternatively, ambient temperature, or cell surface temperature may be measured. Conductors or sensors on the back of the measurement electronics board 30 may be held in contact with the cell tabs by virtue of a spring force applied by clips as described hereinafter. The number of electronics boards 30 that are required depends on the number of cells in a single module 10 and the physical shape of the cells. Some cells have all tabs on the same side, others have tabs on both sides. In the latter case, more electronics boards are required to take measurements from all the tabs and will be located on both sides of the stack, rather than just one side as illustrated in Fig.5. Although, each different measurement to be made may have its own PCB, such as one for cell voltage, one for temperature sensing, etc, it is preferable to be able to combine the functions on the same PCB.

For marine and offshore applications, it may be necessary to provide several connection points on each board, in order to ensure that the electronics board is robust enough to handle vibration, shock and other mechanical hazards of that environment. Thus, a single board may have between ten and twenty screwed mechanical connections. The screwed mechanical connections help to hold the electronics boards in place during production. These screwed connections may be improved, reduced in number, or finally removed, by integrating threaded screw holes in the cooler material, to receive the screws, but this is not a sufficiently reliable solution as the screws are reliant on thin edges in the threads to hold them in place. These options are costly in terms of manufacturing time and the number of components required.

The present invention addresses these problems by means of incorporating a mounting in the housing to hold the electronics board in place, which does not depend entirely on screws to hold the boards in place. An electronics board housing, or mount, 33 is provided which may be integral with a cell housing, or cooler, or separate, but adapted to be connected to the coolers. The board housing may comprise a plurality of board retainers comprising resilient members having a downwardly facing surface to interact with an upper surface of an electronics board when the board is pushed into place. The resilient members may comprise parts of a perimeter wall 35 provided with at least two breaks in the wall, into which are inserted the resilient members 34 adapted to interact with a surface of the electronics board to hold the board in place.

More detail of this type of board housing perimeter wall and resilient member is illustrated in Figs.3 and 4. The perimeter wall 35 may comprise metal or a synthetic material, such as the same polymer plastics from which the cell housing 32 is manufactured, such as polythene, polyamide, such as PA66 plastics, or thermoplastics such as TCE2, TCE5, or other suitable materials. The perimeter wall is manufactured by any suitable technique, which may include moulding or extrusion to the required shape, or by additive manufacturing. The material is chosen to be able to withstand normal operating temperatures of the energy storage modules 10.

The board housing 33 may comprise a housing wall 35 alone, or may also comprise a housing base 38. As can be seen from the figures, the wall 35 may take a shape which has rectangular faces and a cross section, along most of its length, that is substantially cuboid, or a rectangular prism. One or more breaks, or gaps, 36 in the wall may be provided, in which a resilient retaining member 34, such as a clip, is mounted between wall sections 35a, 35b either side of the break 36. The resilient member 34 may not entirely fill the break, to allow for manufacturing tolerances and movement relative to the wall sections 35a, 35b.

Alternatively, for example if the resilient members form an integral part of the cooler housing, the housing wall may simply be provided with the resilient members as extensions of the cooler wall 32.

The resilient member may be mounted on a rotatable fitting 37, inserted into corresponding openings in adjacent wall sections 35a, 35b, or the fitting 37 may be mounted in corresponding openings in the base 38. Alternatively, the material and form of the clip may be such as to allow repeated bending and return without reducing the strength of the clip and the rotatable fittings are not required.

In the example of Fig.3, mounting post 39 is provided on the base 38, close to the clip 34. A corresponding opening is formed in the electronics board, so that the opening fits around an upper section 40 of the mounting post 39 and rests in contact with a disc shaped upper surface 41 of a lower section 42 of the mounting post. The lower section may have a wider diameter than the upper section, so that it supports the electronics board on its upper surface. The mounting post need not be circular. A square, rectangular, oval, or other suitable section may be used, but a circular section opening is convenient to manufacture by drilling.

Fig.3 illustrates only part of the board housing, but in a typical housing, more than one clip and mounting post combination may be provided along the length of the wall. One or more electronics boards 30 may be fitted, to the module, according to the size of the board. As can be seen in Fig.5a, the ends 32 of the cooler form a surface to which the electronics board 30 (not shown) may be mounted by clips 34. One board 30 is illustrated schematically in Fig.5b, held in contact with cell tabs of each cooler by the resilient members 34 formed as an extension to each cooler 54. An alternative, not shown, is to provide a housing and mounting points for the electronics board and fit the housing and board to the cooler. As shown in the example of Fig.3, a mounting post 39 may be provided to provide support for the board 30, when fitted. In this example, the mounting post has upper and lower sections 40, 42 as in Fig.3. The mounting posts may be removable, so that only a sufficient number are provided, for example two for a single circuit board, or four for two separate circuit boards, to reduce problems with accurately drilling the opening in the circuit board that more posts might cause.

The inner surface of the wall sections 35a, 35b adjacent to the break 36 may be provided with protruding tabs 43, for example as illustrated in Fig.4, the upper surfaces 47 of which, support the board 30 in that location. These tabs 43 have the same effect as the support surface 41 of the mounting post 39 in Fig.3, locating the board in conjunction with the lower surface of the clip 34. A reduced height section 44 of the perimeter wall allows the clip 34 to be fitted in the gap 36 to the adjacent sections 35a, 35b on rotatable mounts 37, as before, or else the clip may be formed as an integral part of the reduced height wall section 44 from a resilient material that allows it to be pushed away to fit the electronics board, then spring back to hold it in place.

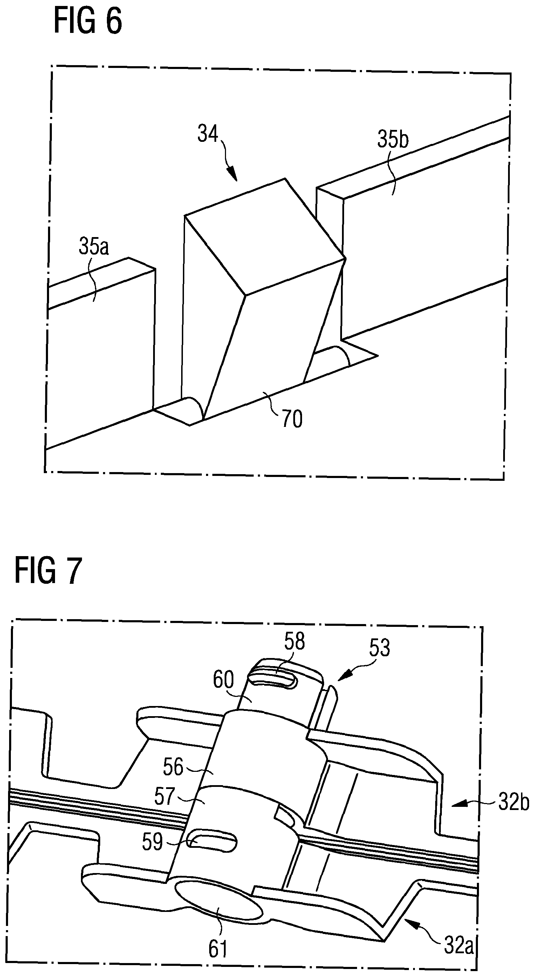

The clip 34 may be formed as an integral part of the cooler, for example as part of the injection moulding process for forming the cooler, or may be fitted to the coolers 54, for example by screwing the board housing to moulded screw threads in the cooler. The clip 34 may take various forms, but requires at least a downward facing surface 45, 70 extending into the region where the electronics board is located. The downward facing surface may be generally perpendicular to the wall 35, or may be angled, as illustrated in Fig.6, such that when pushed away by the electronics board, the board slides into place and when the resilient member springs back after the electronics board has been located, the downward angled surface 70 holds the board in place. The downward facing surface 45, 70 contacts an upper surface of the electronics board and acts against the upward force exerted by the upper surface 41 of the lower section of the support post 39. The board is inserted between pairs of resilient locating members, space from one another by a suitable distance, substantially equal to the width of the electronics board being inserted. If present, an opening on the circuit board is placed over the support post 39. In one embodiment, the edge of the electronics board engages between the downward facing surface 45, 70 of the clip and the vertical element 46 of the clip to allow the board to be pushed into position and held in place. Thus, the board is placed on the electronics housing, or extension of the cooler and provided that sufficient force is applied to the board, the board 30 clicks into position and remains fixed. If pressure is applied to the resilient members to push them away from the electronics board, then the electronics board can be removed from the housing, for example for maintenance or replacement.

The clips hold the board such that they fix the separation between the cell tabs and the PCB. For additional security, the PCB may be held in position, by inserting screws into the support post 39, in case the clips are inadvertently opened. Even with the additional screws for security, the mounting system using resilient clips as described significantly reduces the number of screws required and the time taken for assembly of the electronics board 30 to the stack of energy storage devices when forming the energy storage module. For convenience, the same material as the cooler is manufactured from may be used to form the clips, although other materials for the clips may be used, such as metal, provided that there are no conducting parts on the edges of the electronics board that might come into contact with the metal clips.

The support posts provide a volume to screw the screws into, as nuts and bolts are not practical, given the restricted access once the electronics board is in place. Although separate mounting boards may be used, or threaded connections formed within the body of the cooler, the additional detail and volume required introduce very tight tolerances for positioning during production, so are not desirable.

The mounting design of the present invention reduces production cost by reducing the number of parts required, in particular the number of screws that must be inserted and hence reducing the assembly time and the complexity of the production process. The arrangement has better mechanical stability than conventional assemblies. In particular, coolers which are injection moulded, or formed by additive manufacturing, allow the housing to be easily adapted to include the integrated clip design of the mounting, either as part of the design of the cooler, or as a separate housing which may be fitted to the coolers, so that the electronics board can be fitted.

In addition to, or independent of the electronics board mounting clip arrangement as described above, the mounting system may comprise a snap on mounting mechanism integral with the cooler, for joining each of the coolers in the stack to its neighbour.

An energy storage module of the type illustrated in Fig.8 typically comprises a large number of components which are mounted together to form a stack. For clarity, Fig.8 illustrates a stack that is being constructed, on its side. However, in practice, the stack is formed from the ground up and the parts of the cell and coolers that are in exploded view are placed one above the other on the top of the stack. The more energy storage devices per stack in one module, the lower the cost per kWh both in terms of components and assembly costs, but in construction terms it becomes more difficult to mount the coolers and cells in the stack as the stack grows, because the preferred mounting direction for typical Lithium-ion polymer cells results in a tall stack on a base of relatively small surface area. Mechanical stability is important both during mounting of the cells to form the module and also for the finished product, which in the marine environment, may be subjected to shock and vibrations and must meet minimum standards to be able to cope with these. In practice, even when constructed by stacking each cooler, cell and flexible sheet together and then adding the next cooler, cell and flexible sheet on top, when complete, the energy storage module may well be installed in a cabinet in a different orientation.

The mounting system of the present invention may be used to improve the construction process by integrating a snap-fit, or clip-on connector mechanism into the injection moulded coolers when they are manufactured. Thus, the coolers may be placed on top of one another and clipped into the stack ensuring that the cooler is positioned with the correct tolerances and gives the cell stack additional mechanical strength during manufacturing and also strengthens the structure of the module for the produced product. The integrated connector may be easily incorporated by manufacturing the coolers from synthetic materials, such as polymer plastics, as described with respect to Fig.1 above, having suitable mechanical properties. The resilient nature of the polythene, polyamide, or thermoplastics described is less prone to damage from repeated deformation as required for this type of connector, such as bending and stretching movement, of the parts. The connector arrangement has the benefit that there is no significant increase in cost by forming the clips during manufacture of the cooler, beyond any one off change to the design, yet the production complexity and additional parts required are reduced and overall mechanical strength of the modules is improved.

There may be two or more connection points between adjacent coolers. For example, as shown in Fig.8, there may be at least four connection points 53, one close to each corner of the cooler, to increase the stiffness of the construction or even six connection points, evenly spread along the length of the cooler wall. Preferably, all of the coolers 54 are identical, as this reduces manufacturing costs. Where all coolers are identical, the design may incorporate the electronics board retainers as described with respect to Figs.2 to 6 above. In either case, the clips may be designed to be able to connect to either the cooler above or the cooler below when stacked. Alternatively, the clips may be arranged, so that at each clip location, it is possible to connect to both the cooler above and the cooler below in the stack. The connection points 53 are formed with a through hole that permits a rod (not shown) to be inserted along the full length of the stack of coolers 54 to connect the coolers to one another, and a pin (not shown) to be inserted between two adjacent coolers 54 to align and connect the coolers.

Fig.7 illustrates part of the cooler with the connector 53 in the cooler wall 32. In this example, one part of the cooler wall 32a has been modified to provide a substantially cylindrical opening 61, having a slot 59 to receive a connector pin 60 which may be provided with a locking element 58 in the part of the pin which protrudes above the crenellated wall 32a, 32b of the cooler. When the next cooler in the stack is added, then the section of the pin 60 with the locking element fits into the opening 61 of the next cooler and the locking element 58 snaps into the slot 59 to lock the two coolers together. The same type of mechanism may be used in each of the plurality of connection points. In the example of Fig.7, a connector pin is fitted into a moulded connection point and engages with the cooler housing wall where it has been modified. The pin extends above the top of the cooler housing, so that when the next cooler is placed on top, it is correctly located. The clip may have one up-side and one downside to allow the same connector component to connect to the cooler that is placed above the cooler in the stack and also to connect to the cooler below in the stack, effectively by adding the component 60 to the substantially cylindrical body 56, 57 formed in the cooler wall as part of the production process, or the cooler wall may be created with part 60 already in place. Although it is possible to form stacks with a resilient member without the locking element, this is less secure and simply provides a locating mechanism as the stack is formed. The use of a locking mechanism 58 ensures that the stack does not accidentally come apart and a special tool may be required to open the clip and release the adjacent cooler housings from one another.

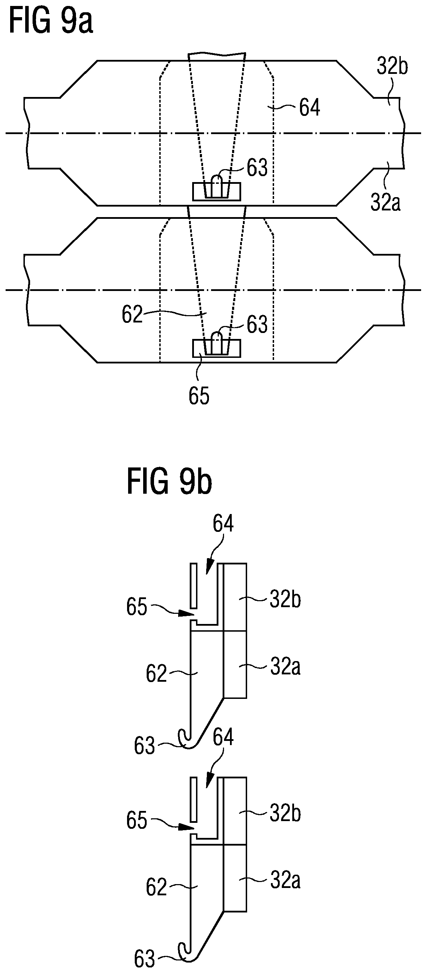

The precise mechanism by which the adjacent coolers are joined together may vary. For example, Fig.9 illustrates an alternative push fit arrangement with a dependent resilient tab, in this example, a tapered body 62, formed in the lower section 32a of the cooler wall 32 and a receptacle 64 formed in the upper section 32b of the cooler wall to receive a dependent resilient tab 62 from the cooler above. The tapered body 62 may also be provided with a locking hook 63, as shown, for insertion in a slot 65 in the receptacle 64. The cooler is aligned by aligning each tab 62 in its corresponding receptacle 64 at each connection point, then applying sufficient pressure to the cooler body 54 to push each tab 62 and its hook further down into the receptacle 64 until they clip into the slots 65 in the lower section. Pushing back on the hook and tab through the slot whilst pulling the coolers apart would allow the coolers to be separated again.

The present invention has the advantages that it reduces production cost by reducing the number of parts, which is beneficial both in saving production time and reducing material cost, as well as allowing an automated production line to be used for the assembly. The connectors have the effect of increasing the stiffness and mechanical strength of the cell stack, thereby simplifying handling of the module during production. As the connectors have a fixed location relative to one another and to the coolers they ensure that the distance between coolers does not vary unduly due to tolerances of other produced parts or mechanical strain, caused, for example, by swelling of battery cells within the cooler housing. These aspects all help to increases the reliability of the electronics and the cooling system. The use of polymer plastics to form the cooler allows the mounting system to be formed as an integral part of the cooler.

Although the detailed examples have been given with respect to electrochemical cells, such as batteries, for example Li-ion, alkaline, or NiMh batteries, or others, the invention applies to other types of stored energy units, in particular non-cylindrical capacitors, ultracapacitors, or supercapacitors, fuel cells, or other types of energy storage which have a surface that can be cooled by a cooler and which may also suffer if the temperature of modules of the stored energy units regularly goes outside a preferred operating range, reducing the overall lifetime and increasing maintenance costs.

## Claims

1. A mounting system for an energy storage module, the module comprising a plurality of energy storage devices electrically connected together in series; each energy storage module further comprising plurality of coolers onto each of which one of the plurality of energy storage devices is mounted; wherein the mounting system comprises two or more connectors on each cooler, each connector comprising a first part and a second part, wherein the connector is connectable with a corresponding second part and first part on another cooler; wherein each first part comprises a resilient member supporting a protruding tab; wherein each second part comprises a corresponding slot to receive the protruding tab; and, wherein the mounting system further comprises an electronics board mount, the mount comprising one or more pairs of resilient locating members spaced from one another by a distance substantially equal to a width of the electronics board, each resilient locating member further comprising a downward facing surface,
wherein each connector comprises a cylindrical body integrally formed in a wall of the cooler incorporating the second part and the first part, the resilient member of the first part comprising a pin independently removable from the cylindrical body,
wherein the cylindrical body and resilient member of the connector of each cooler define a hollow through hole; and wherein the mounting system further comprises a rod inserted in the through hole and extending through the plurality of coolers.

2. A system according to claim 1, wherein the first part comprises a cylindrical part having a first diameter; and the second part comprises a cylindrical part having a second diameter, greater than the first diameter.

3. A system according to any preceding claim, wherein the resilient member comprises a tapered body and the second part comprises a correspondingly tapered receptacle.

4. A system according to any preceding claim, wherein an electronics board comprises one or more sensors, connectable to tabs of each cell of each cooler forming the energy storage module when the electronics board is fitted in the mount.

5. A system according to any preceding claim, wherein components of the mounting system comprise one of polythene, polyamide, or thermoplastics.

6. A system according to any preceding claim, wherein the coolers comprise one of polythene, polyamide or thermoplastics.

## Patentansprüche

1. Montagesystem für ein Energiespeichermodul, wobei das Modul mehrere Energiespeichervorrichtungen umfasst, die miteinander in Reihe geschaltet sind; wobei jedes Energiespeichermodul ferner mehrere Kühler umfasst, auf denen jeweils eine der mehreren Energiespeichervorrichtungen montiert ist; wobei das Montagesystem zwei oder mehr Verbindungsstücke auf jedem Kühler umfasst, wobei jedes Verbindungsstück ein erstes Teil und ein zweites Teil umfasst, wobei das Verbindungsstück mit einem entsprechenden zweiten Teil und ersten Teil eines anderen Kühlers verbunden werden kann, wobei jedes erste Teil ein elastisches Element umfasst, das eine vorstehende Lasche trägt; wobei jedes zweite Teil einen entsprechenden Schlitz umfasst, um die vorstehende Lasche aufzunehmen; und wobei das Montagesystem ferner eine Elektronikplatinenhalterung umfasst, wobei die Halterung ein oder mehrere Paare von elastischen Fixierelementen umfasst, die um eine Strecke, die im Wesentlichen gleich einer Breite der Elektronikplatine ist, voneinander entfernt sind, wobei jedes elastisches Fixierelement ferner eine nach unten gerichtete Oberfläche aufweist,
wobei jedes Verbindungsstück einen zylindrischen Körper umfasst, der in einer Wand des Kühlers, die das zweite Teil und das erste Teil aufnimmt, einteilig gebildet ist, wobei das elastische Element des ersten Teils einen Stift umfasst, der aus dem zylindrischen Körper unabhängig entfernt werden kann, wobei der zylindrische Körper und das elastische Element des Verbindungsstücks jedes Kühlers ein hohles Durchgangsloch definieren; und wobei das Montagesystem ferner einen Stab umfasst, der in das Durchgangsloch eingeführt wird und sich durch die mehreren Kühler erstreckt.

2. System nach Anspruch 1, wobei das erste Teil einen zylindrischen Teil umfasst, der einen ersten Durchmesser aufweist; und das zweite Teil einen zylindrischen Teil umfasst, der einen zweiten Durchmesser aufweist, der größer als der erste Durchmesser ist.

3. System nach einem vorhergehenden Anspruch, wobei das elastische Element einen konischen Körper und der zweite Teil eine entsprechend konische Aufnahme umfasst.

4. System nach einem vorhergehenden Anspruch, wobei eine Elektronikplatine einen oder mehrere Sensoren umfasst, die mit Laschen jeder Zelle jedes Kühlers verbunden werden können und die das Energiespeichermodul bilden, wenn die Elektronikplatine in die Halterung eingesetzt ist.

5. System nach einem vorhergehenden Anspruch, wobei die Komponenten des Montagesystems Polyethylen, Polyamid oder Thermoplast umfassen.

6. System nach einem vorhergehenden Anspruch, wobei die Kühler Polyethylen, Polyamid oder Thermoplast umfassen.

## Revendications

1. Système de montage d'un module d'accumulation d'énergie, le module comprenant une pluralité de dispositifs d'accumulation d'énergie montés électriquement en série les uns avec les autres ; chaque module d'accumulation d'énergie comprenant en outre une pluralité de refroidisseurs sur chacun desquels l'un de la pluralité de dispositifs d'accumulation d'énergie est montée ; dans lequel le système de montage comprend deux ou plusieurs connecteurs sur chaque refroidisseur, chaque connecteur comprenant une première partie et une deuxième partie, dans lequel le connecteur peut être connecté à une deuxième partie et une première partie correspondante d'un autre refroidisseur ; dans lequel chaque première partie comprend un élément élastique supportant un ergot en saillie ; dans lequel chaque deuxième partie comprend une forme correspondante pour recevoir l'ergot en saillie ; et dans lequel le système de montage comprend en outre une monture de plaquette d'électronique, la monture comprenant une ou plusieurs paires d'éléments élastiques de localisation écartés l'un de l'autre d'une distance sensiblement égale à une largeur de la plaquette d'électronique, chaque élément élastique de localisation comprenant en outre une surface faisant face vers le bas,
dans lequel chaque connecteur comprend un corps cylindrique venu de matière dans une paroi du refroidisseur incorporant la deuxième partie et la première partie, l'élément élastique de la première partie comprenant une broche pouvant être retirée indépendamment du corps cylindrique,
dans lequel le corps cylindrique et l'élément élastique du connecteur de chaque refroidisseur définissent un trou traversant creux ; et dans lequel le système de montage comprend en outre une barre insérée dans le trou traversant et passant dans la pluralité de refroidisseurs.

2. Système suivant la revendication 1, dans lequel la première partie comprend une partie cylindrique d'un premier diamètre ; et la deuxième partie comprend une partie cylindrique d'un deuxième diamètre, plus grand que le premier diamètre.

3. Système suivant n'importe quelle revendication précédente, dans lequel l'élément élastique comprend un corps conique et la deuxième partie comprend une partie femelle de conicité correspondante.

4. Système suivant n'importe quelle revendication précédente, dans lequel la plaquette d'électronique comprend un ou plusieurs capteurs, pouvant être connectés à des ergots de chaque cellule de chaque refroidisseur formant le module d'accumulation d'énergie lorsque la plaquette d'électronique est adaptée dans la monture.

5. Système suivant n'importe quelle revendication précédente, dans lequel des constituants du système de montage comprennent l'un du polyéthylène, du polyamide ou des thermoplastiques.

6. Système suivant n'importe quelle revendication précédente, dans lequel les refroidisseurs comprennent l'un du polyéthylène, du polyamide ou des thermoplastiques.
